# EUROPEAN PATENT APPLICATION

(11) **EP 1 980 935 A1**
(43) Date of publication of application: **15.10.2008**
(21) Application number: 07707902.8
(22) Date of filing: 01.02.2007
(51) Int. Cl.: G06F 3/041, G06F 3/038, G06F 3/048, G09G 3/20, G09G 5/00

(54) **INFORMATION PROCESSING DEVICE**

(30) Priority: 03.02.2006 JP 2006027315
(71) Applicant: MATSUSHITA ELECTRIC INDUSTRIAL CO., LTD., Osaka 571-8501 (JP)
(72) Inventor: TERADA, Tomohiro c/o Matsushita El. Ind. Co. Ltd., 2-1-61, Shiromi, Chuo-ku, Osaka 540-6207 (JP); YAMASHITA, Atsushi c/o Matsushita El. Ind. Co. Ltd., 2-1-61, Shiromi, Chuo-ku, Osaka 540-6207 (JP); HIRAI, Takuya c/o Matsushita El. Ind. Co. Ltd., 2-1-61, Shiromi, Chuo-ku, Osaka 540-6207 (JP)
(74) Representative: Balsters, Robert
(86) International application number: PCT/JP2007/051716
(87) International publication number: WO 2007/088939

(57) **Abstract**

In a display device having a dual view display function, provided is an information processing device which is capable of causing a user who performs an operation to feel an intuitive operation and which is capable of providing a user who does not perform the operation with an improved viewability. The information processing device includes: a display section (16) for concurrently displaying a left image and a right image; an operation section (12) for receiving an operation; an imaging section (13) for taking an image of a hand performing the operation; a hand image generation section (101) for generating, by using the taken image, a hand image representing the hand performing the operation; an operating hand determination section (102) for determining whether the hand performing the operation is the left hand or the right hand; an image determination section for determining whether a viewed image is the left image or the right image; and an execution processing section (104) for causing the left image and the right image having the hand image overlapped thereon to be displayed and for executing processing corresponding to a position on the right image when the right image is determined to be viewed, and for causing the right image and the left image having the hand image overlapped thereon to be displayed and for executing processing corresponding to a position on the left image when the left image is determined to be viewed.

## Description

### TECHNICAL FIELD

The present invention relates to an information processing device, and more specifically relates to an information processing device for performing processing in accordance with information and a command which are operated by a user based on image information displayed in a dual view display mode.

### BACKGROUND ART

A display device having a generally known dual view display function is capable of concurrently displaying images in different view directions, respectively. Accordingly, images which vary in accordance with a viewpoint position of a user (see Patent document 1, for example) can be displayed. In Patent document 1 a parallax barrier is set in front of a liquid crystal display panel, whereby it is possible to realize a dual view display for displaying images which vary in accordance with the viewpoint position of the user.

As a method for performing processing in accordance with information operated by the user by using displayed image information, there is a method using a touch panel. Specifically, the touch panel is set on a screen of a display device. The GUI (Graphical User Interface) displayed on the screen includes a display component (hereinafter referred to as a GUI component) typified by a menu and a switch button. The user touches a desired GUI component on the screen through the touch panel, whereby a command and information related to the GUI component can be inputted. In this manner, the touch panel is set on the screen, whereby the user can feel an intuitive operation.

However, on the display device having the dual view display function, the images which vary in accordance with the viewpoint position of the user are displayed. That is, on the display device having the dual view display function, various images are displayed with respect to users at respective viewpoint positions. Accordingly, when an input is performed by using the touch panel set on the screen as above described, a processing device cannot identify a view direction of an image with respect to which the input was performed, and thus cannot perform appropriate processing.

In order to solve the problem, a method is proposed in which the GUI components are displayed such that positions thereof on the respective different images do not overlap with each other on the screen (see Patent document 2, for example). In other words, in the case where the input is performed by using the touch panel set on the screen as above described, the GUI components are displayed in different positions on the screen, and thus it is possible to identify the view direction of the image with respect to which the input is performed. Accordingly, the appropriate processing can be performed with respect to the respective viewpoint positions.
Patent document 1: Japanese Laid-Open Patent Publication No. 2003-177357
Patent document 2: Japanese Laid-Open Patent Publication No. 2005-284592

### DISCLOSURE OF THE INVENTION

### PROBLEMS TO BE SOLVED BY THE INVENTION

In a method in which the GUI components are displayed such that the positions thereof do not overlap with each other on the screen, as above described, the user performs an input operation by using the touch panel set on the screen. Therefore, when the user at one viewpoint position performs an operation, the user's hand performing the operation obscures an image displayed with respect to another viewpoint position. In this manner, in the method in which the GUI components are displayed such that the positions thereof on the different images do not overlap with each other on the screen, the input operation is performed by using the touch panel set on the screen, whereby the user who performs the operation can feel an intuitive operation. However, a problem is posed in that a user who does not perform the operation cannot have an appropriate view.

Further, in the method in which the GUI components are displayed such that the positions thereof do not overlap with each other on the screen, in order to identify the view direction of the image with respect to which the input is performed, the GUI components need to be located at the positions on the different images so as not to be overlapped with each other on the screen. The GUI components play a role in simplifying the user's input. Therefore, according to the above-described conventional method, the GUI components need to be located at the positions on the different images so as not to be overlapped with each other on the screen, and consequently, positions of the GUI components are limited and cannot be located at the optimum positions on respective images. That is, even if a GUI component is located at the optimum position on an image displayed in one view direction, where one user can easily perform input operation, the GUI component cannot necessarily be located at the optimumposition on an image displayed in another view direction.

Therefore, an object of the present invention is to provide an information processing device which is capable of causing a user, who performs an operation, to feel the intuitive operation and also capable of providing a user, who does not perform the operation, with an improved viewability even in the case where a display device having a dual view display function is used. Alternatively, an object of the present invention is to provide an information processing device which is capable of locating the GUI components at the optimum positions on respective images displayed in different view directions and which allows the user to perform an input intuitively and simply.

### SOLUTION TO THE PROBLEMS

The present invention is based on an information processing device for performing processing in response to an operation performed by a user. The present invention comprises: a display section for concurrently displaying a left image which is viewable from a left side view direction of a display surface and a right image which is viewable from a right side view direction of the display surface; an operation section for receiving an operation performed by the user for specifying a position on an image displayed on the display section; an imaging section for taking an image of a hand of the user performing an operation on the operation section; a hand image generation section for generating a hand image representing the hand of the user performing the operation by using the image taken by the imaging section; an operating hand determination section for determining whether the hand of the user performing the operation on the operation section is the left hand or the right hand; an image determination section for determining whether an image viewed by the user who performs the operation is the left image or the right image in accordance with a result determined by the operating hand determination section; and an execution processing section for executing a display of the left image and the right image having the hand image overlapped thereon and for executing processing indicated at a position on the right image in accordance with the consideration that the position on the right image has been specified, the position on the right image corresponding to the position specified on the operation section, when the image determination section determines the right image is viewed by the user, and for executing a display of the right image and the left image having the hand image overlapped thereon and for executing processing indicated at a position on the left image in accordance with the consideration that the position on the left image has been specified, the position on the left image corresponding to the position specified on the operation section, when the image determination section determines the left image is viewed by the user.

Preferably, the operating hand determination section determines whether the hand of the user performing the operation is the left hand or the right hand in accordance with the hand image generated by the hand image generation section.

Preferably, the information processing device further comprises an identification information reader section for reading identification information contained in an IR tag worn on the hand of the user performing the operation. The operating hand determination section determines whether the hand of the user performing the operation is the left hand or the right hand in accordance with the identification information read by the identification information reader section.

Preferably, when the left hand is determined by the operating hand determination section as the hand of the user, the execution processing section changes the left image to an image which is identical to the right image, and then causes the hand image to be overlapped and displayed on the left image and on the right image, also, when the right hand is determined by the operating hand determination section as the hand of the user, the execution processing section changes the right image to an image which is identical to the left image, and then causes the hand image to be overlapped and displayed on the left image and on the right image.

Preferably, the execution processing section causes a GUI component contained in the right image to be overlapped and displayed on the left image, and also causes the hand image to be overlapped and displayed on the left image and the right image when the left hand is determined by the operating hand determination section as the hand of the user, on the other hand causes the GUI component contained in the left image to be overlapped and displayed on the right image, and also causes the hand image to be overlapped and displayed on the left image and the right image when the right hand is determined by the operating hand determination section as the hand of the user.

Preferably, when the left hand is determined by the operating hand determination section as the hand of the user, the execution processing section causes a copy of the right image and the hand image to be translucent so as to be overlapped and displayed on the left image, and also causes the translucent hand image to be overlapped and displayed on the right image, also, when the right hand is determined by the operating hand determination section as the hand of the user, the execution processing section causes a copy of the left image and the hand image to be translucent so as to be overlapped and displayed on the right image and also causes the translucent hand image to be overlapped and displayed on the left image.

Preferably, when the left hand is determined by the operating hand determination section as the hand of the user, the execution processing section causes the hand image to be overlapped and displayed on a right image and also causes an image indicative of positions of fingertips of the hand image to be overlapped and displayed on the left image, also, when the right hand is determined by the operating hand determination section as the hand of the user, the execution processing section causes the hand image to be overlapped and displayed on the left image and also causes the image indicative of the positions of the fingertips of the hand image to be overlapped and displayed on the right image.

Preferably, when the left hand is determined by the operating hand determination section as the hand of the user, the execution processing section specifies, from among the images included in the left image, an image at a position corresponding to a position on the right image which is specified on the operation section and changes a display mode of the image, also, when the right hand is determined by the operating hand determination section as the hand of the user, the execution processing section specifies, from among the images included in the right image, an image at a position corresponding to a position on the left image which is specified on the operation section and changes the display mode of the image.

Preferably, the left image and the right image include GUI components having a common display, and different pieces of processing are interrelated with the GUI component on the left image and with the GUI component on the right image, respectively.

Preferably, the operation section receives, from a user, an interrelating operation for interrelating a GUI component with processing to be executed when the GUI component is specified. When the left hand is determined by the operating hand determination section as the hand of the user at the time of the interrelating operation, the execution processing section causes the GUI component, which is interrelated based on the interrelating operation, to be overlapped and displayed on the left image, also, when the right hand is determined by the operating hand determination section as the hand of the user at the time of the interrelating operation, the execution processing section causes the GUI component, which is interrelated based on the interrelating operation, to be overlapped and displayed on the right image.

### EFFECT OF THE INVENTION

As above described, according to the present invention, whether the image viewed by the user who performs the operation is the left image or the right image is determined. When the image is determined as the right image, a hand image is overlapped and displayed on the right image, whereas when the image is determined as the left image, the hand image is overlapped and displayed on the left image. That is, on the image displayed with respect to the user who performs the operation, the hand image of the user is overlapped. Therefore, the user who performs the operation can feel the intuitive operation. Further, in this case, with respect to the user who does not perform the operation, the hand image of the user who performs the operation is not overlapped. Accordingly, even in the case where respective images are concurrently displayed in different view directions, that is, in the case of a dual view display, the hand of the user who performs the operation does not interrupt the user who does not perform the operation, which improves the viewability.

### BRIEF DESCRIPTION OF THE DRAWINGS

[FIG. 1] FIG. 1 is a diagram illustrating an outline of processing performed by the information processing device according to the present invention.
[FIG. 2] FIG. 2 is a diagram showing an appearance in which the imaging section 13 is taking an image of an operation section 12 and a circumference thereof.
[FIG. 3] FIG. 3 is a diagram showing a configuration of the information processing device according to the present invention.
[FIG. 4] FIG. 4 is a flowchart showing a flow of the processing of the information processing device according to the present invention.
[FIG. 5] FIG. 5 is a diagram schematically showing display processing performed by the information processing device.
[FIG. 6] FIG. 6 is a flowchart showing, in detail, a flow of processing performed in right hand/left hand determination processing.
[FIG. 7] FIG. 7 is a diagram schematically showing a right hand/left hand determination processing method.
[FIG. 8] FIG. 8 is a diagram showing an appearance in which processing is performed on an image in a 3D display mode and an image in a 2D display mode.
[FIG. 9] FIG. 9 is a diagram showing an appearance in which the processing is performed by the execution processing section 104 on images which are displayed in the 2D display mode and whose scales are different from each other.
[FIG. 10] FIG. 10 is a diagram showing an appearance in which in the case where a building T, on an image A, pressed by a user 21 is not displayed on an image B, the execution processing section 104 changes a scale of the image B.
[FIG. 11] FIG. 11 is a diagram showing an appearance in which a shortcut icon for executing a series of operations is moved from an image displayed with respect to an operator to an image displayed with respect to a non-operator.
[FIG. 12] FIG. 12 is a diagram showing an exemplary area for moving which is set on each of the image A and the image B.
[FIG. 13] FIG. 13 is a diagram showing an appearance in which a user 21 in a front passenger's seat does not know an operation method on an audio screen, and thus presses a help button.
[FIG. 14] FIG. 14 is a diagram showing an appearance in which after the help button is pressed, the audio screen is displayed on both screens and the user 22 in a driver' s seat teaches the operation method.
[FIG. 15] FIG. 15 is a diagram showing another example of the appearance shown in FIG. 14.
[FIG. 16] FIG. 16 is a diagram showing another example of the appearance shown in FIG. 14.
[FIG. 17] FIG. 17 is a diagram showing another example of the appearance shown in FIG. 14.
[FIG. 18] FIG. 18 is a diagram showing an exemplary imaging section 13 located under an operation screen.
[FIG. 19] FIG. 19 is a diagram showing a configuration including two imaging sections 13.
[FIG. 20] FIG. 20 is a diagram showing an exemplary image 13g of the operation section 12 and the circumference thereof which are imaged by the imaging section 13.

### DESCRIPTION OF THE REFERENCE CHARACTERS

- 11: image source
- 12: operation section
- 13: imaging section
- 14: control section
- 15: display section control section
- 16: display section
- 101: hand image generation section
- 102: right hand/left hand determination section
- 103: hand image overlapping section
- 104: execution processing section
- 21: user in a front passenger's seat
- 22: user in a driver's seat

### BEST MODE FOR CARRYING OUT THE INVENTION

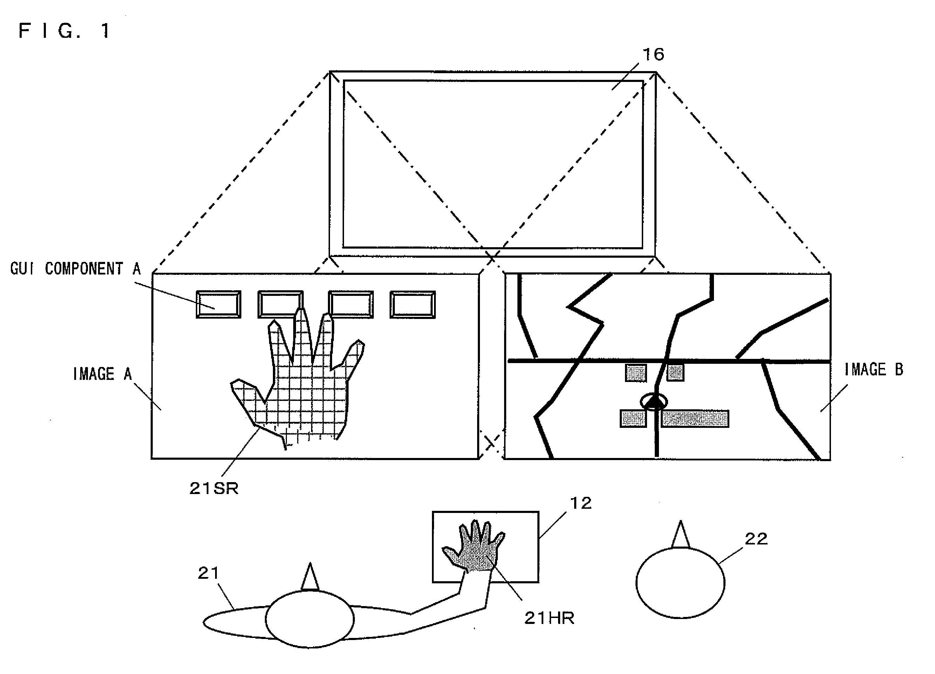

Before specifically describing an information processing device according to the present invention, an outline of processing performed by the information processing device according to the present invention will be described with reference to FIG. 1. FIG. 1 is a diagram illustrating the outline of the processing performed by the information processing device according to the present invention.

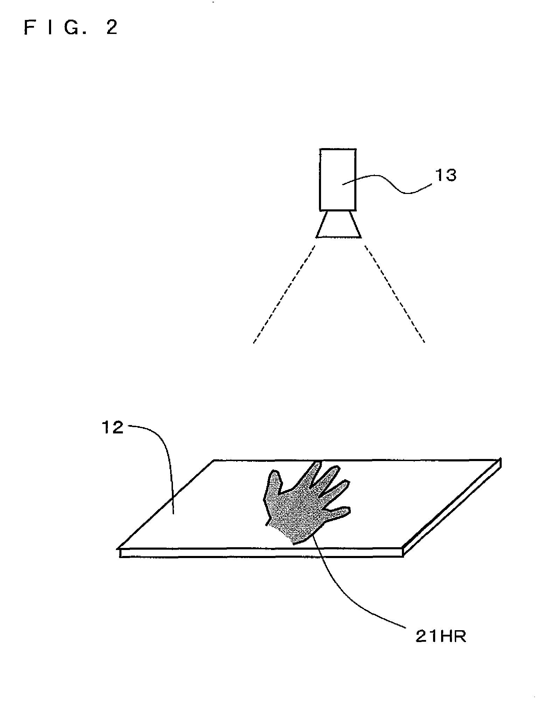

In FIG. 1, assumed is a case where the information processing device according to the present invention is mounted in a vehicle. A user 21 is seated in a front passenger's seat, and a user 22 is seated in a driver's seat of a vehicle. A display section 16 is a display having a dual view display function, and causes an image A to be displayed with respect to the user 21 in the front passenger' s seat. As shown in FIG. 1, an image including GUI components A is displayed as an image A. On the other hand, the display section 16 causes an image B, which is different from the image A, to be displayed with respect to the user 22 in the driver's seat. As shown in FIG. 1, map information is displayed as the image B. Between the user 21 in the front passenger's seat and the user 22 in the driver's seat, an operation section 12 configured with a touch panel is located flatly. The user 21 in the front passenger's seat performs an operation on the operation section 12 by using his/her right hand 21HR. Further, as shown in FIG. 2, suppose that the operation section 12 is imaged by an imaging section 13 such as a camera. The imaging section 13 is fixed on a ceiling or the like of the vehicle. FIG. 2 is a diagram showing an appearance in which the imaging section 13 images the operation section 12 and a circumference thereof.

Suppose that the user 21 in the front passenger's seat is to press one of the GUI components A while viewing the image A, and to perform processing interrelated with the one of the GUI components A. In this case, the user 21 in the front passenger's seat performs an operation on the operation section 12 by using his/her right hand 21HR, and specifies a position on the image A. With the processing performed by the information processing device according to the present invention, a right hand image 21SR of the user 21 in the front passenger' s seat, the right hand image 21SR having been imaged by the imaging section 13, is overlapped on the image A. The user 21 in the front passenger's seat moves the right hand 21HR on the operation section 12 while viewing the user' s right hand image 21SR displayed in an overlapped manner, thereby pressing one of the GUI components A on the image. On the other hand, on the image B at the side of the user 22 in a driver' s seat, a right hand image 21SR of the user 21 in the front passenger's seat is not overlapped.

In this manner, in the information processing device according to present invention, instead of fixing the touch panel on the screen of the display section 16, the right hand image 21SR of the user 21 in the front passenger's seat is displayed on the screen of the display section 16. Accordingly, it is possible cause the user 21 in the front passenger's seat, who performs the operation, to feel an intuitive operation. Further, on the information processing device according to the present invention, the right hand image 21SR of the user 21 in the front passenger's seat, who performs the operation, is not displayed on the side of the user 22 in the driver's seat, who does not perform the operation. Accordingly, even in the case where the display section having the dual view display function is used, the right hand HR of the user 21 in the front passenger's seat, who performs the operation, does not disturb the user 22 in the driver' s seat, whereby viewability is improved.

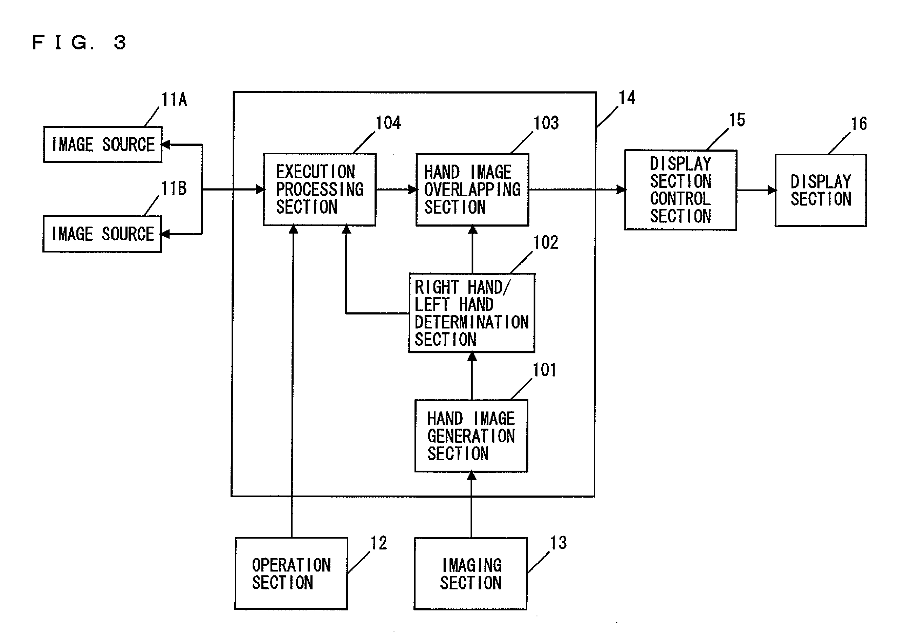

With reference to FIG. 3, the information processing device according to the present invention will be described in detail. FIG. 3 is a diagram showing a configuration of the information processing device according to the present invention. As shown in FIG. 3, the information processing device according to the present invention includes the operation section 12, the imaging section 13, a control section 14, a display section control section 15, and the display section 16. An image source 11A and an image source 11B are sources for outputting images displayed with respect to the users at different viewpoint positions. The images are typified by an image received by a television, and an image reproduced by the reproducing device such as an AV device. Hereinafter, for the sake of description, the image outputted from the image source 11A is referred to as the image A, and an image outputted from the image source 11B is referred to as the image B. Further, the description hereinafter is based on an assumption that the image A is displayed in a view direction on the left side facing the display section 16 (hereinafter simply referred to as a left side direction), and the image B is displayed in the view direction on the right side (hereinafter simply referred to as a right side direction).

The operation section 12 receives an operation performed by the user for specifying a position on the displayed image. That is, the user, who performs the operation, (hereinafter referred to as an operator) performs the operation by placing his/her hand on the operation section 12 so as to specify the position on the image. The operation section 12 which at least includes an operation surface is adaptable, and in this case, the operation section 12 is configured with a touchpad, for example . A coordinate point on the touch panel and a coordinate point on the image are interrelated with each other.

The imaging section 13 images an area at least including the operator's hand on the operation section 12, and outputs the image including the operator's hand. For example, the imaging section 13 is configured with a visible light camera. In addition to the visible light camera, the imaging section 13 may be configured with an infrared camera, a near-infrared camera, a thermography and the like. That is, the imaging section 13 may be configured with any device as long as the device is an imaging device capable of extracting the operator's hand area. Further, as shown in FIG. 2, the imaging section 13 is fixed at a position from which the operation section 12 can be imaged.

The control section 14 is configured with a CPU, for example. The control section 14 includes functions of a hand image generation section 101, a right hand/left hand determination section 102, a hand image overlapping section 103, and an execution processing section 104. The hand image generation section 101 generates an image of a hand area (hereinafter referred to as a hand image) indicative of the hand of the operator by using the image of the operation section 12 and the circumference thereof which are obtained by the imaging section 13. The hand image generation section 101 may generate a hand image of a picture, or may generate a hand image by extracting a contour of the hand area and by adding a predetermined pattern or a color to the contour. When the hand image is generated by the hand image generation section 101, the right hand/left hand determination section 102 determines in accordance with the hand image, whether the hand of the operator is the right hand or the left hand. Based on a result determined by the right hand/left hand determination section 102, the hand image overlapping section 103 overlaps the hand image generated by the hand image generation section 101 on the image A or the image B. The execution processing section 104 executes processing in accordance with information inputted by the operator through the operation section 12. Specifically, in accordance with the result determined by the right hand left/hand determination section 102, the execution processing section 104 obtains information on whether the operator is the user with respect to whom the image A is displayed or the user with respect to whom the image B is displayed. That is, in accordance with the result determined by the right hand/left hand determination section 102, the execution processing section 104 identifies the view direction and the user seated therein who has performed an input, thereby performing processing. For example, when the user with respect to whom the image A is displayed is the operator, the execution processing section 104 accesses the image source 11A as appropriate, and performs processing based on the input performed by the user with respect to whom the image A is displayed.

The display section control section 15 provides the display section 16 with the respective images (the images A and B) processed by the hand image overlapping section 103, which is included in the control section 14, and controls the display section 16 so as to perform the dual view display. The display section 16 is a display which is capable of the dual view display. The display section 16 is, for example, configured with a liquid crystal display panel having a parallax barrier fixed on a front surface thereof. With the configurations of the display section control section 15 and the display section 16 like these, the image A and the image B are concurrently displayed on the display section 16 in different view directions. That is, the images displayed on the display section 16 vary depending on the viewpoint positions of the users. Note that the display section control section 15 and the display section 16 may be configured with any device as long as the dual view display can be realized thereby.

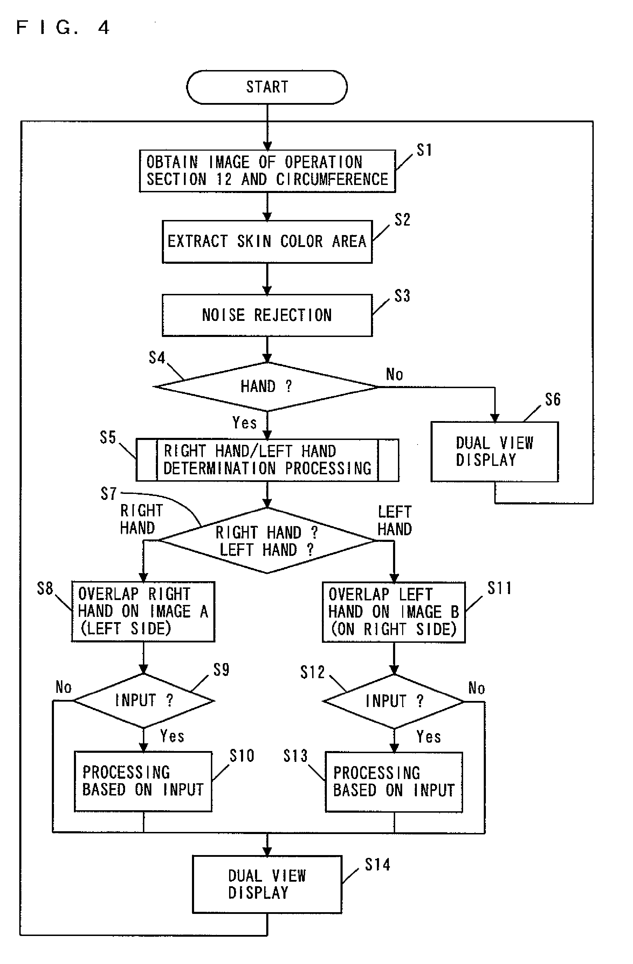

Next, with reference to FIG. 4, processing of the information processing device according to the present invention will be described in detail. FIG. 4 is a flowchart showing a flow of the processing of the information processing device according to the present invention.

First, the hand image generation section 101 obtains the image of the operation section 12 and the circumference thereof, which is taken by the imaging section 13 (step S1) . The hand image generation section 101 extracts a skin color area from the image of the operation section 12 and the circumference obtained in step S1 (step S2). Noise rejection is performed with respect to the extracted skin color area so as to obtain an area which is assumed to be a hand (step S3). As a method for the noise rejection, a generally known method may be used. As an example, in the case where there has been extracted a plurality of areas, a dimension of each of the areas is compared with one another, and the largest area is obtained as the assumed hand area. In the case where the infrared camera is used as the imaging section 13, the skin color area cannot be extracted. Therefore, in order to extract the hand area, a method for extracting the hand area in accordance with a threshold value of a brightness value is used. In this case, preferably, an infrared projector is fixed so as to illuminate an upper portion of the operation surface, whereby the hand area is easily extracted.

Subsequent to step S3, the hand image generation section 101 determines whether or not the area obtained in step S3 is the hand (step S4). As a method for determining the hand, a generally known method may be used. For example, there may be considered a method in which patterns of hands are previously stored, and a pattern of the area obtained in step S3 are compared with the patterns of the hands (pattern matching). In step S4, when the obtained the area is determined as the hand, the hand image generation section 101 generates a hand image based on the area obtained in step S3, and the processing proceeds to step S5. On the other hand, when hand image generation section 101 does not determine the area as the hand, in step S4, the dual view display is performed without having the hand image overlapped thereon (step S6).

Subsequent to step S4, the right hand/left hand determination section 102 determines, in accordance with the extracted hand image, whether the operator's hand is the right hand or the left hand (step S5). Processing in step S5 will be described later in detail. In the case where the operator's hand is determined as the right hand in step S5, the processing proceeds to step S8 (right hand in step S7). On the other hand, the operator's s hand is determined to be the left hand in step S5, the processing proceeds to step S11 (left hand in step S7).

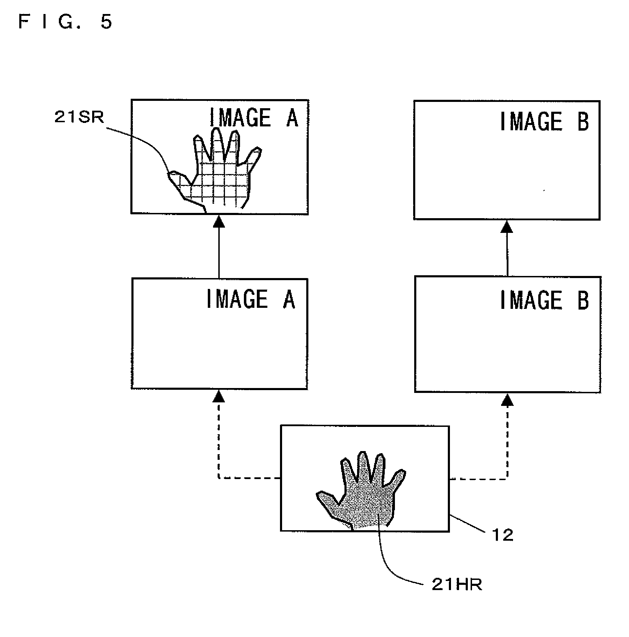

In step S8, the hand image overlapping section 103 overlaps the hand image of the right hand obtained in step S4 on the image A displayed on the left side. The dual view display is then performed in which the hand image is overlapped on the image A only (step S14). That is, since the user who perform the operation with his/her right hand is positioned on the left side which is the same as a display location of the image A, the hand image overlapped on the image A is viewed by the user who performs the operation with his/her right hand. For the sake of easy understanding, explanation will be made with reference to FIG. 5. When the operator places his/her hand (the right hand 21HR shown in FIG. 5) on the operation section 12, the hand image (hand image 21SR of the right hand shown in FIG. 5) of the operator is finally overlapped and displayed on the image A, which is displayed on the left side, in accordance with the above-described processing. FIG. 5 is a diagram schematically showing a display based on the processing performed by the information processing device. In step S8, in order to determine a position on the image A on which the hand image is to be overlapped, for example, there may be adopted a method in which four corners of the operation section 12 are detected from the image of the operation section 12 and the circumference thereof, the image being obtained by the imaging section 13, and the four corners are adjusted such that the four corners correspond to four corners of the image A or B.

Subsequent to step S8, when the user performs an input to specify a position on the image by using the operation section 12 while viewing the hand image having been overlapped and displayed (YES in step S9), since the operator's hand is determined as the right hand in step S5, the execution processing section 104 then accesses the image source 11A as appropriate so as to perform processing based on the position on the image A, the position being specified by using the operation section 12 (step S10). For example, if there is the GUI component situated on the image A, processing interrelated therewith is performed. Thereafter, the dual view display is performed, where the hand image is overlapped and displayed only on the image A processed by the execution processing section 104 (step S14).

On the other hand, when the operator' s hand is determined as the left hand in step S5, the hand image of the left hand obtained in step S4 is overlapped on the image B displayed on the right side (step S11) . Accordingly, the dual view display is performed, where the hand image is overlapped only on the image B (step S14) . That is, the user, who performs the operation with his/her left hand, is seated on the right side which is the same as a display location of the image B, and thus the hand image overlapped on the image B is viewed only by the user who performs the operation with his/her left hand. Subsequent to step S11, when the user performs an input to specify a position on the image by using the operation section 12 while viewing the overlapped hand image (YES in step S12) , since the operator's hand is determined as the right hand in step S5, the execution processing section 104 accesses the image source 11B as appropriate so as to perform processing based on the position on the image B, the position being specified by using the operation section 12 (step S13). Thereafter, the dual view display is performed, where the hand image is overlapped and displayed only on the image B processed by the execution processing section 104 (step S14).

In this manner, in accordance with the result determined by the right hand/left hand determination section 102, the execution processing section 104 identifies whether the operator has performed the input to the position on the image A or the operator has performed the input to the position on the image B, thereby performing separate pieces of processing in accordance with the respective operators. That is, the execution processing section 104 is capable of changing processing details in accordance with the inputs performed by the operators seated in the different view directions.

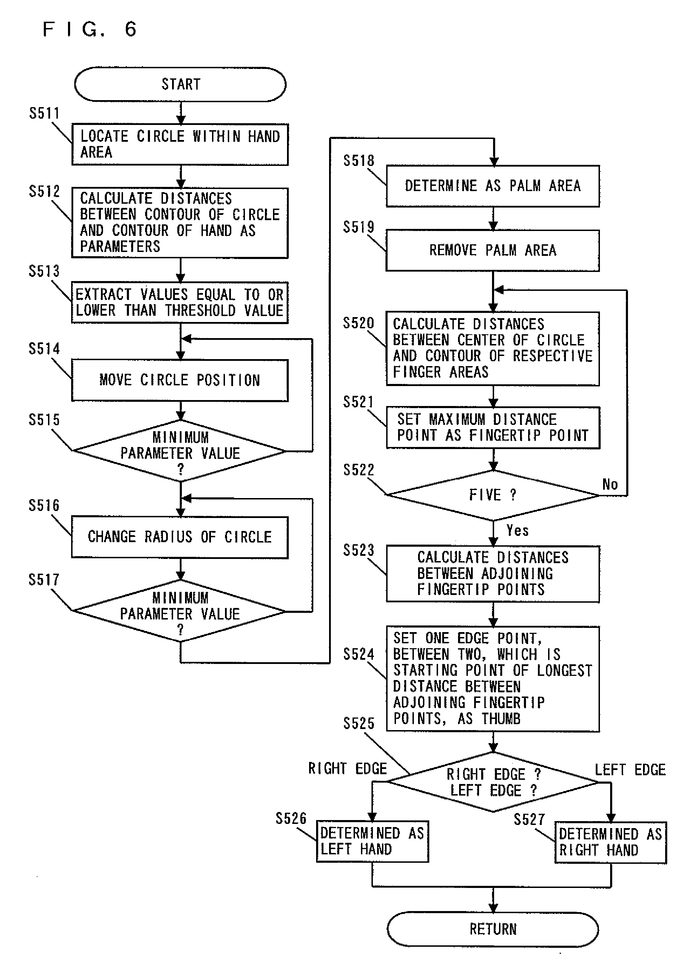

Next, with reference to FIG. 6, the right hand/left hand determination processing (step 5 in FIG. 4) will be described in detail. FIG. 6 is a flowchart showing, in detail, a flow of the right hand/left hand determination processing. As an example, described hereinbelow is a method for detecting a finger area by calculating a palm area based on the hand area, specifying positions of fingertips of the respective fingers, and then determining whether the operator's hand is the left hand or the right hand. First, a circle having a predetermined radius is to be located within the hand area extracted by the hand image generation section 101 (step S511). A value of the predetermined radius is set such that the circle to be located is larger than a width of each of the fingers. Subsequent to step S511, a distance between a contour of the circle and a contour of the hand area is calculated as a parameter (step S512). For example, in this case, distances between arbitrary points on the contour of the circle and arbitrary points on the contour of the hand area are calculated as parameters. Subsequent to step S512, parameters which are lower than the threshold value are extracted (step S513) . When the palm portion is to be determined, the parameters relating to the finger areas having large values are removed from objects of the calculation so as to reduce a processing load.

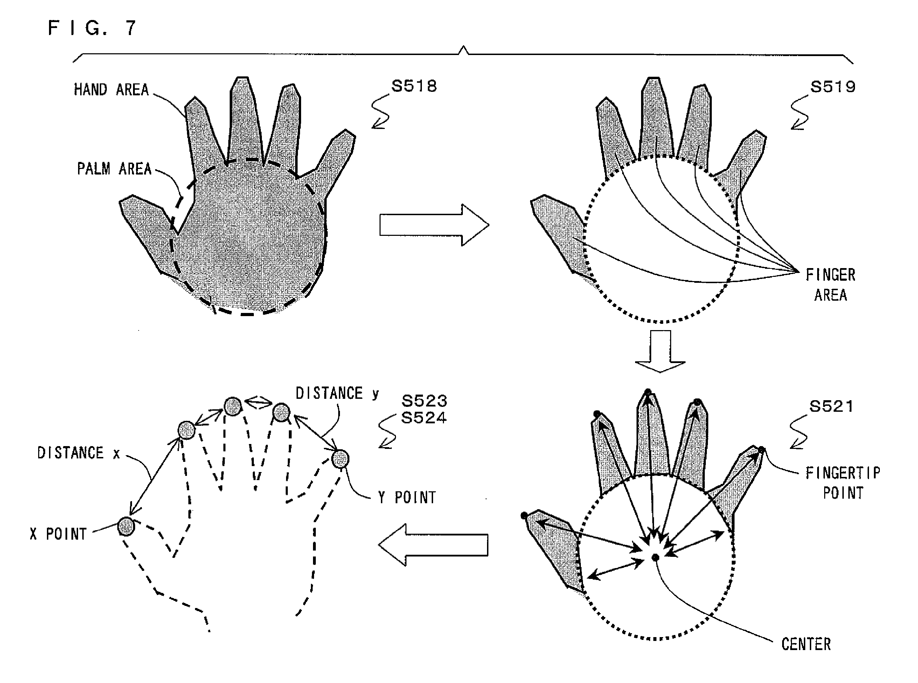

Subsequent to step S513, a position and the radius of the located circle are changed so as to obtain a circle which is most similar to a palm portion of the hand area as the palm area (step S514 to S518). Specifically, the position of the circle is moved and the position at which each of the parameter values becomes a minimum is obtained (step S514 and S515) . In this case, the position of the circle is moved in accordance with deviations in the parameter values calculated based on the respective arbitrary points on the contour of the circle, for example. Specifically, the circle is moved toward a region in which parameters having large values are distributed densely. When the position of the circle is determined, the radius of the circle is changed and a radius is calculated such that each of the parameter values becomes the minimum (step S516 and S517) . As shown in FIG. 7, the circle obtained through the processing in steps S514 to S517 is determined as the palm area (step S518). FIG. 7 is a diagram schematically showing the right hand/left hand determination processing method.

Through the processing in steps S514 to S517, there may be a case where two circles having different radiuses from each other are created as the circles most similar to the palm. In this case, it is preferable that a circle having a larger radius is set as the palm area. In the above description, the palm area is calculated based on the circle, however, the palm area may be calculated by using an oval shape or a shape similar to an actual palm shape. If a shape to be set as the palm area is more similar to the actual palm shape, the palm area can be calculated more precisely. Further, the parameters may be for example such parameters obtained by a generally known pattern matching.

Subsequent to step S518, as shown in FIG. 7, the palm area is removed and the respective finger areas are extracted (step S519). Distances from the center of the palm area (the center of the circle) to respective points on the contour of each of the finger areas are calculated (step S520). Among the distances calculated with respect to each of the finger areas, a point on the contour which is the longest distance from the center of the palm area is set as a fingertip point (step S521). As shown in FIG. 7, a point which is the longest distance from the center of the circle corresponds to the fingertip. When five fingertip points are set (step S522), distances between adjoining two of the fingertip points are calculated, respectively (step S523). As shown in FIG. 7, in the case of a thumb, a distance between the thumb and an index finger becomes the smallest compared to distances from the thumb to other fingers. Accordingly, four distances are calculated, as shown in FIG. 7. Subsequent to step S523, among the set respective fingertip points, a fingertip point which is located at one of two edges in a left-right direction and which is one end point of a longer distance calculated in step S523 is set as a fingertip point of the thumb (step S524). In FIG. 7, with regard to the two edges (an X point and a Y point), a distance x including the X point as one end point is greater than a distance y including the Y point as one end point. Therefore, the X point is recognized as the thumb.

Subsequent to step S524, whether the fingertip point of the thumb is located at the edge on the right side or at the edge on the left side is determined (step S525) . When the fingertip point of the thumb is located at the edge on the right side, the operator's hand is determined as the left hand (step S526), whereas when the fingertip point is located at the edge on the left side, the operator's hand is determined as the right hand (step S527) . Here ends the description of the flow of the right hand/left hand determination processing.

In the above-described right hand/left hand determination processing, the thumb is calculated in accordance with the edges in the left-right direction, but is not limited thereto. For example, in FIG. 7, the thumb is located at the lowest position on the screen compared to the other fingers. Based on this location, the fingertip point located at the lowest position on the screen may be set as the thumb. Further, a calculation method based on the above-described edges in the left-right direction and a calculation method based on the fingertip point at the lowest position are used in a combined manner, and then the fingertip point of the thumb may be set. Still further, any other method generally known to the public may be used.

In the above-described right hand/left hand determination processing, determination of the right hand or the left hand is made by using the hand image generated by the hand image generation section 101, however, is not limited thereto. As an example, there may be adopted a method in which the operator wears, on his/her hand, an IR tag containing identification information indicative of the right hand or the left hand, and communication is performed between the same and an identification information reader section (not shown in diagrams), whereby whether the operator' s hand is the right hand or the left hand is determined. The identification information reader section communicates with the IR tag and reads the identification information. The identification information reader section may be fixed inside the operation section 12, or may be located outside the operation section 12. Further, there may be adopted a method in which the lines of the palm are detected through the image processing, and then the right hand or left hand is detected.

As above described, the execution processing section 104 is capable of changing processing details in accordance with respective inputs performed by the operators seated in the different view directions. The above description is merely exemplified by the processing interrelated with the input by one operator, but is not limited thereto. For example, while the processing interrelated with the input by the one operator is being performed, the processing interrelated thereto may be performed on the image displayed with respect to the other user who is not performing the operation. Hereinafter, examples of the processing between the images will be described in detail.

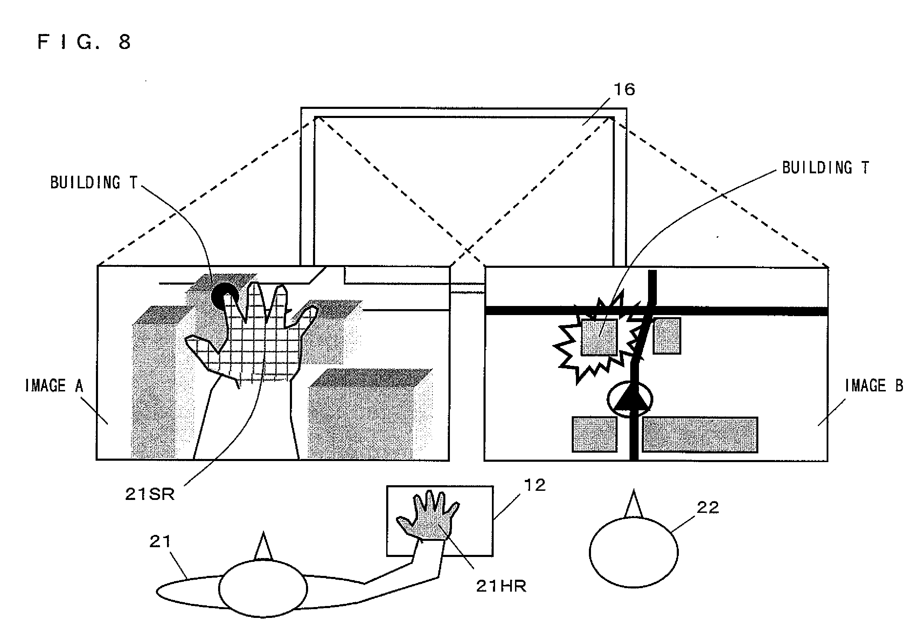

With reference to FIG. 8, a first example will be described in detail. For example, there may be a case where, between the users who view different map images, respectively, the operator wants to let the non-operator know a particular position on the map. When the operator has pressed the particular position on the map image while the users are respectively viewing the different map images, a display mode of the map image viewed by the non-operator is changed, for example, by blinking a position on the map image, the position corresponding to the particular position pressed by the operator, whereby the non-operator is informed of the particular position.

FIG. 8 is a diagram showing an appearance in which the processing is performed on the image in a 3D display mode and on the image in a 2D display mode. In FIG. 8, as with FIG. 1, assumed is a case where the information processing device according to the present invention is fixed in a vehicle. Among respective sections shown in FIG. 8, only the image A and the image B are different from those shown in FIG. 1 in terms of details and processing thereof. Detailed description of remaining sections in FIG. 8 will be omitted. As shown in FIG. 8, the image A is a map image in the 3D display mode. The image B is a map image in the 2D display mode. The user 21 in the front passenger's seat views the map in the 3D display mode. The user 22 in the driver's seat views the map in the 2D display mode.

As shown in FIG. 8, suppose that the user 21 in the front passenger's seat presses, with his/her right hand, a building T (GUI component) displayed in the 3D mode on a screen of the image A while viewing the right hand image 21SR overlapped on the image A. In this case, the execution processing section 104 first obtains from the right hand/left hand determination section 102 a result of a determination of whether the user 21 or the user 22 has performed an input. Since the user 21 performs the operation with his/her right hand 21HR, the right hand is determined by the right hand/left hand determination section 102. That is, it is understood that the operator is the user 21 seated on the left side. The execution processing section 104 detects the building T which is displayed in the 3D mode and is situated on a coordinate point on the image A, the coordinate point corresponding to a coordinate point pressed on the operation section 12. The execution processing section 104 then searches, on the image B viewed by the user 22 in the driver' s seat who does not perform the operation, a coordinate point of a building T displayed in the 2D display mode corresponding to the building T displayed in the 3D displaymode. As shown in FIG. 8, the execution processing section 104 performs processing of, for example, blinking the searched building T displayed in the 2D display mode on the image B. In FIG. 8, during the processing by the execution processing section 104, the coordinate points need to be converted between the map displayed in the 3D display mode and the map displayed in the 3D display mode. As a method for this conversion, a generally known conversion method will be used, and detailed description will be omitted.

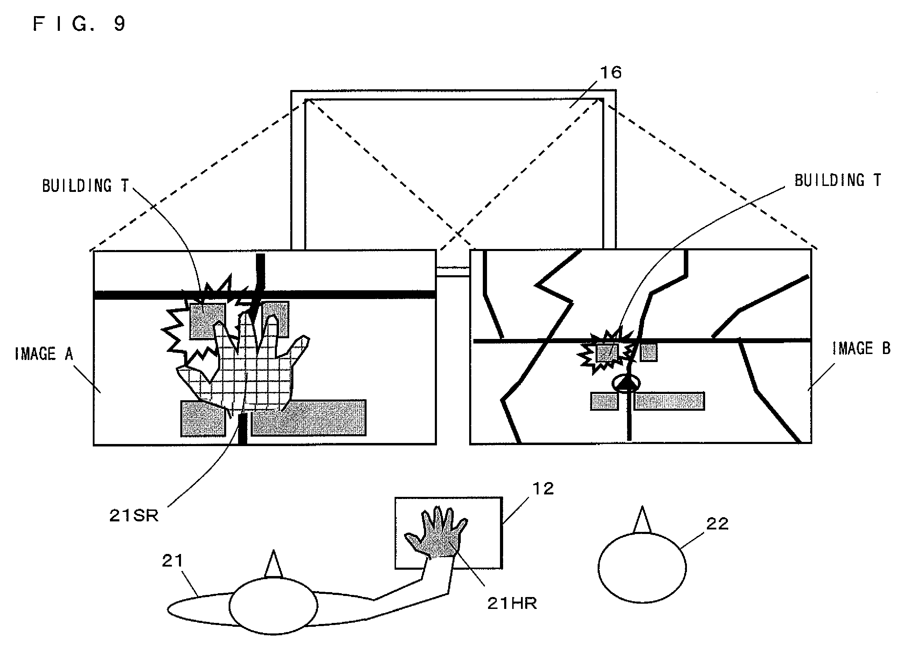

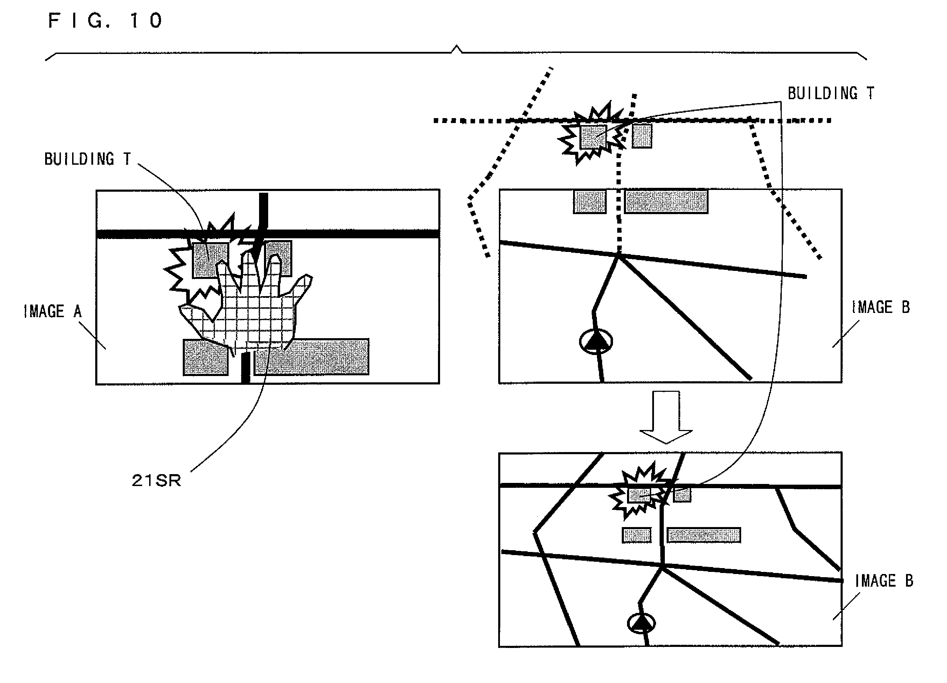

In FIG. 8, processing between the image displayed in the 3D display mode and the image displayed in the 2D display mode is described. However, as shown in FIG. 9, for example, processing can be performed between images which are each displayed in the 2D display mode and whose scale sizes are different from each other. FIG. 9 is a diagram showing an appearance in which the execution processing section 104 performs processing between the images which are each displayed in the 2D display mode and whose scale sizes are different from each other. Further, as shown in FIG. 10, in the case where the building T, on the image A, pressed by the user 21 is not displayed on the image B, the execution processing section 104 is capable of changing the scale size of the image B and then performing processing so as to display the building T. FIG. 10 is a diagram showing an appearance in which in the case where the building T, on the image A, pressed by the user 21 is not displayed on the image B, the execution processing section 104 changes the scale size of the image B.

Further, in addition to the processing of the pressed coordinate point, the execution processing section 104 may also change a control command in accordance with the result determined by the right hand/left hand determination section 102. Specifically, the GUI components, which have a common function (display), but have different processing details interrelated therewith, are placed on positions at a common coordinate point on the respective images displayed with respect to the user 21 and the user 22. Accordingly, the processing details to be performed will vary depending on whether the operator's hand is the right hand or the left hand. As exemplary GUI components which have a common function, but have different processing details, when an operation is performed by the user 22 in the driver' s seat, a GUI component is displayed in a simple mode so as not to disturb the driving operation. On the other hand, when the operation is performed by the user 21 in the front passenger's seat, processing is performed so as to display as many pieces of information as possible. With the processing like this, a single function can be executed conveniently.

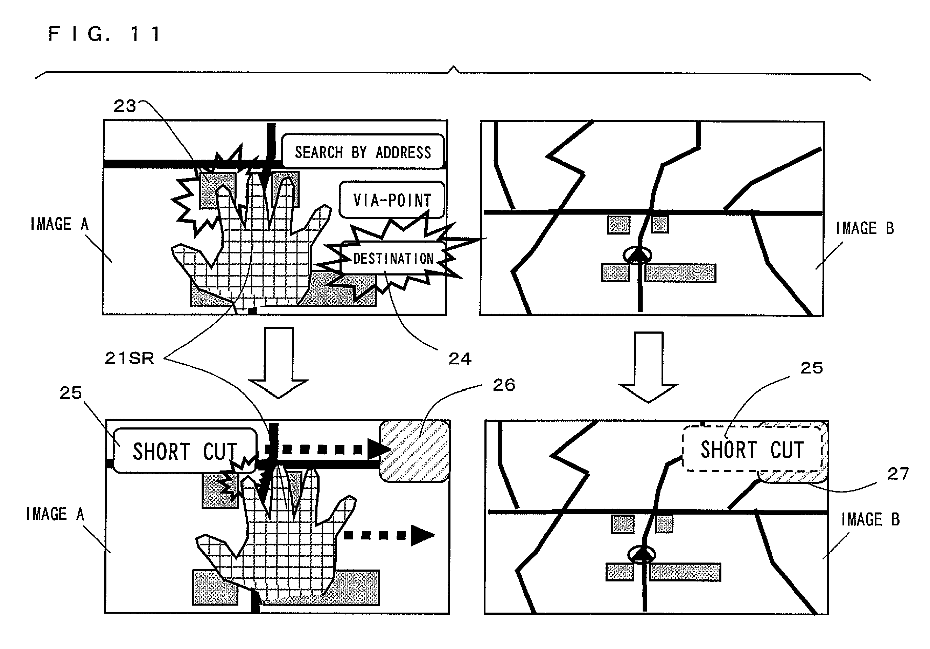

With reference to FIG. 11, a second example will be described in detail. If a user, who is driving a vehicle, performs a complicated operation while viewing a screen, safe driving may be disturbed. Therefore, the complicated operation is performed by the user in the front passenger's seat, and the user driving the vehicle only determines a timing when the complicated operation is to be performed. FIG. 11 is a diagram showing an appearance in which a command (shortcut icon) for executing a series of operations is moved from an image displayed with respect to the operator to an image displayed with respect to the non-operator. In FIG. 11, in order to simplify the operation to be performed by the user 22 who is driving the vehicle, the user 21 in the front passenger's seat performs an interrelating operation and generates a shortcut icon (GUI component) for executing a series of operations to set a destination. The shortcut is then moved to the image B on the side of the user 22 in the driver's seat.

In this case, the user 21 in the front passenger's seat presses a GUI component 23 at a position to be set as the destination on the image A, and then presses a GUI component 24 indicative of the destination. The user 21 in the front passenger's seat then generates a shortcut icon 25 for issuing a command for executing a series of operations relating to a setting of the destination. In FIG. 11, the generated shortcut icon 25 is displayed on an upper right portion of the image A. The user 21 in the front passenger' s seat drags and drops the generated shortcut icon 25 on a particular area 26 set at a upper right corner of the image A. The shortcut icon 25 is then moved to a particular area 27 on the image B at the side of the user 22 in the driver's seat. The user 22 in the driver's seat can set the destination only by pressing the shortcut icon 25 displayed at the particular area 27 on the image B. That is, the timing for execution may be determined by the driver arbitrarily.

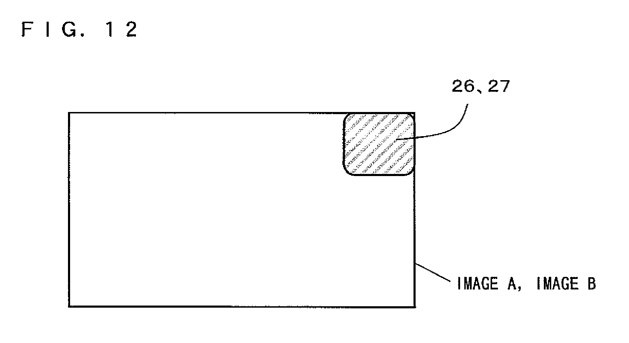

With regard to the processing of generating the shortcut icon 25, a method similar to a batch command generation method, which is used for general personal computers, may be used. Alternatively,another generalmethod may be used. The processing of moving the shortcut icon 25 from the image A to the image B will be described in detail. As shown in FIG. 12, particular areas 26 and 27 are set on the image A and the image B, respectively, as areas (moving areas) between which shortcut icon 25 is moved. FIG. 12 is a diagram showing exemplary moving areas set on the image A and the image B. The moving areas are set such that when the shortcut icon 25 is dragged and dropped on either of the moving areas, the shortcut icon 25 is moved from the image A to the image B (or from the image B to the image A) . In FIG. 12, the moving areas are located at a common position, but may be located at different positions on the image A and on the image B. The processing of moving the shortcut icon may be performed by the execution processing section 104. Alternatively, a shortcut icon moving section may be additionally provided to the configuration shown in FIG. 4 so as to cause the shortcut icon moving section to move the shortcut icon.

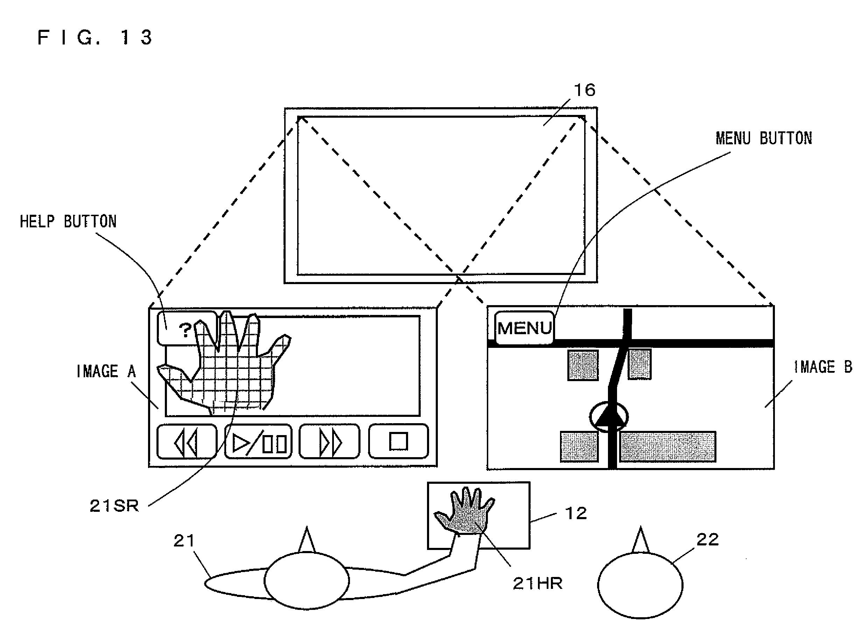

With reference to FIGs. 13 to 17, a third example will be described. In the case of a help mode in which the operator teaches an operation method to the user, while the operator and the user view different images, it is preferable that the hand image of the operator is displayed on both of the images. The processing like this will be described in detail as the third example.

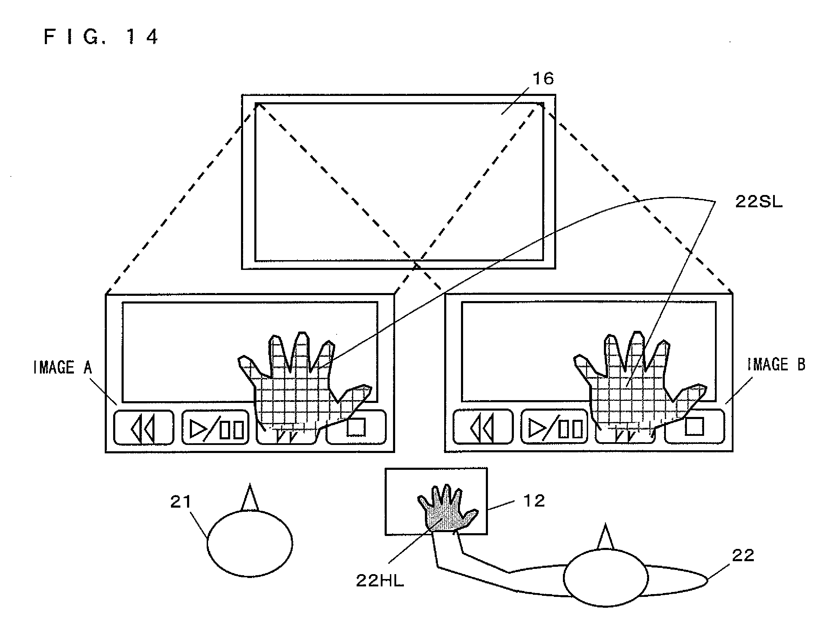

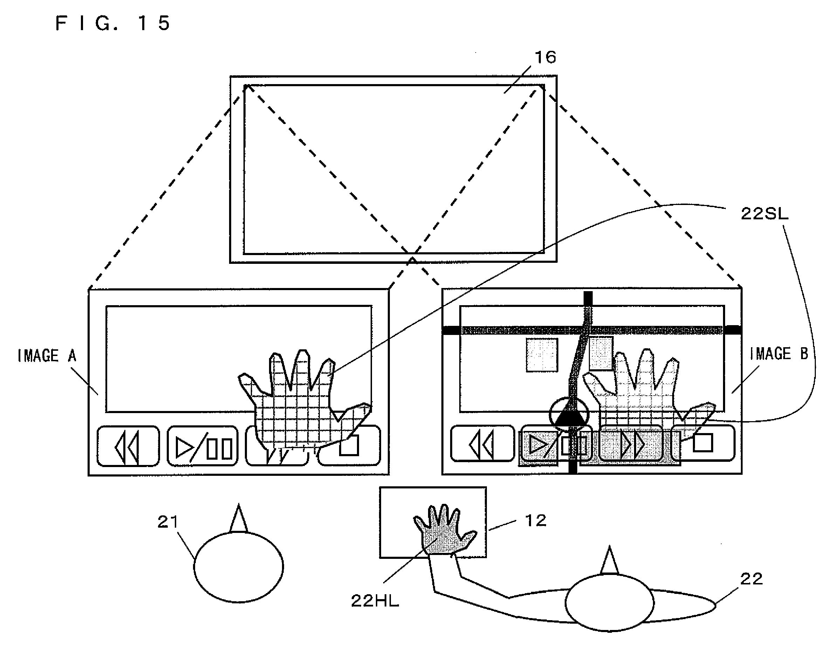

FIG. 13 is a diagram showing an appearance in which the user 21 in the front passenger's seat does not know the operate method on an audio screen and thus presses a help button. FIG. 14 is a diagram showing an appearance in which after the help button is pressed, the audio screen is displayed on both of the screens, and the user 22 in the driver's seat teaches the operation method. FIGs. 15 to 17 are each a diagram showing another example of the appearance shown in FIG. 14.

In FIG. 13, suppose that the user 21 in the front passenger's seat presses the help button while viewing the right hand image 21SR overlapped on the image A. In this case, the execution processing section 104 first obtains, from the right hand/left hand determination section 102, the result of the determination of whether the user 21 or the user 22 has performed the input. Since the user 21 performs the operation with his/her right hand 21HR, the right hand/left hand determination section 102 identifies the right hand. That is, it is understood that the operator is the user 21 seated on the left side. Accordingly, the execution processing section 104 detects a GUI component indicative of the help button located at a coordinate point on the image A, the coordinate point corresponding to a coordinate point pressed on the operation section 12. Thereafter, as shown in FIG. 14, the execution processing section 104 changes an image displayed with respect to the user 22 in the driver's seat to an audio screen which is the same as that displayed on the image A. A teaching person, in this case, the user 22 in the driver' s seat, places his/her left hand 22HL on the operation section 12. In this case, the left hand placed on the operation section 12 is overlapped, by the hand image overlapping section 103, on both of the images A and B displayed with respect to the users 21 and 22, respectively. The user 22 in the driver's seat can teach the operation method to the user 21 in the front passenger's seat by using the left hand image 22SL overlapped on both of the images.

In FIG. 14, the image displayed with respect to the user 22 in the driver's seat is changed to the same image as that on the image A displayed with respect to the user 21 in the front passenger's seat who has pressed the help button. However, as shown in FIG. 15, the execution processing section 104 may overlap a translucent copy of the image A on the image B displayed with respect to the user 22 in the driver's seat.

In the case where the user 21 in the front passenger's seat has pressed the help button while viewing moving images of a television program, a DVD and the like on the audio screen, if the same image is displayed with respect to the user 22 in the driver' s seat as above described, the driving user 22 is distracted by the moving images, which may lead to a disturbance in driving. In this case, the execution processing section 104 may perform processing so as not to show the user 22 in the driver's seat an area having the moving images displayed in the image displayed with respect to the user 21 in the front passenger's seat.

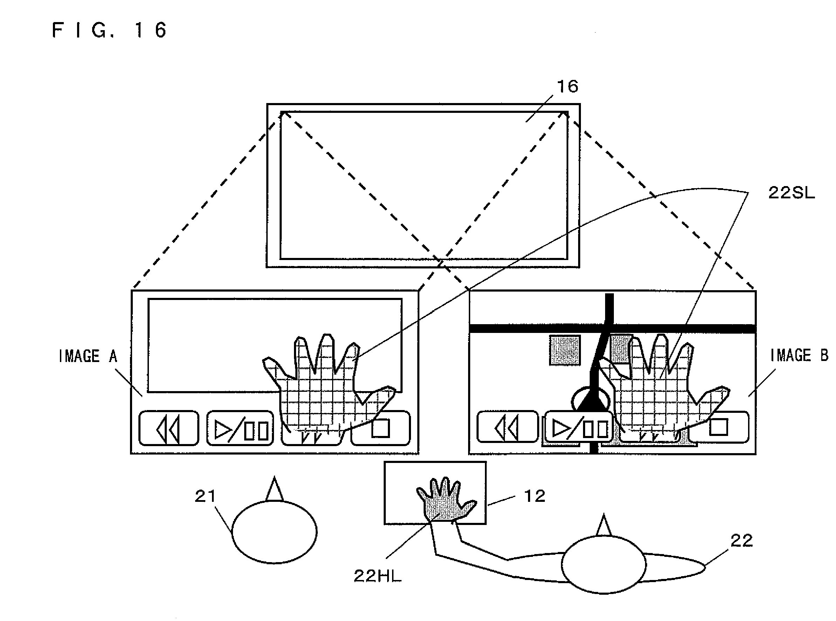

As shown in FIG. 16, the execution processing section 104 may extract operable button GUI components only from the image A displayed with respect to the user 21 in the front passenger's seat, so as to be overlapped on the image B displayed with respect to the user 22 in the driver's seat. In this case, the execution processing section 104 extracts all the GUI components, which are pressable, from the image A displayed with respect to the user 21 who has pressed the help button. The extracted GUI components are overlapped on positions in the image B, the position being the same as the positions in the image A, respectively. Names of functions interrelated with the GUI components are preferably denoted by such names on the GUI components.

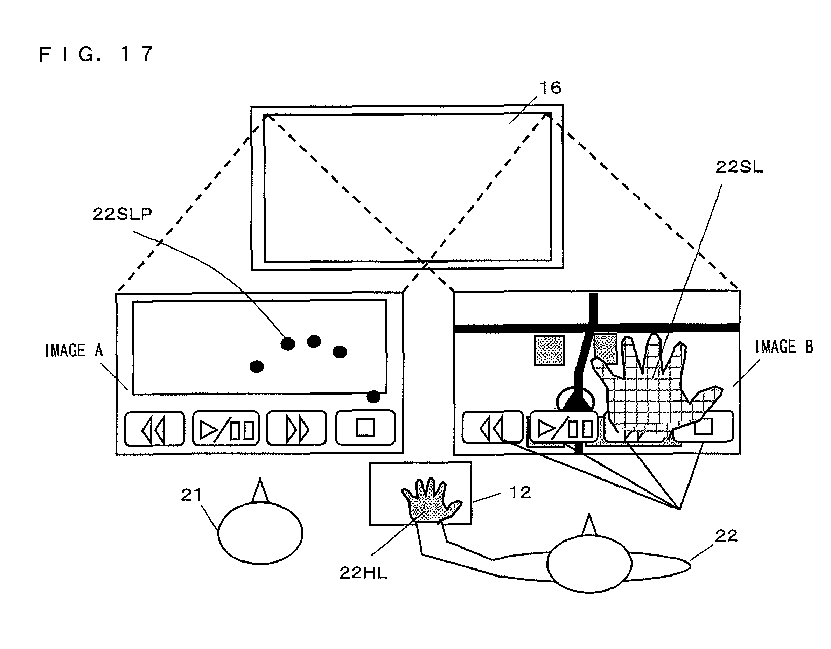

As shown in FIG. 17, the execution processing section 104 may causes the hand image overlapping section 103 to overlap the left hand image 22SL on the image displayed with respect to the user 22 in the driver's seat who teaches the operation method, and to overlap a cursor or an image of a fingertip point only, which is based on the left hand image 22SL, on the image A displayed with respect to the user 21 in the front passenger' s seat who is taught the operation method. In FIG. 17, on the image A displayed with respect to the user 21 in the front passenger's seat, pointers 22SLP indicative of respective fingertip points of the left hand image 22SL are overlapped. The pointers 22SLP may be each of a circle shape as shown in FIG. 17, or may be of any shape as long as the shape is distinguishable from other arrows or other GUI components.

As above described, in the information processing device according to the present invention, whether the hand of the operator is the right hand or the left hand is determined, and the hand image of the operator is overlapped on the image displayed with respect to the operator, whereby an intuitive operation can be provided to the operator. Further, in the information processing device according to the present invention, the hand image of the operator is not displayed at the side of the non-operator. Therefore, even if a display section having the dual view display function is used, the hand of the operator does not disturb the non-operator, and consequently an improved viewability can be realized. Further, in the information processing device according to the present invention, whether the hand of the operator is the right hand or the left hand is determined, whereby processing corresponding to the input made by the operator can be performed in accordance with the result of the determination. In other words, in accordance with the result of the determination, respective inputs made by the users seated in the different view directions can be distinguished, and processing corresponding to the respective input can be performed. Further, in the information processing device according to the present invention, in accordance with the result of the determination of whether the hand of the operator is the right hand or the left hand, the processing in response to the input made by the operator can be performed. Therefore, the GUI components and the like may be placed at appropriate positions on the respective images displayed in the different view directions.

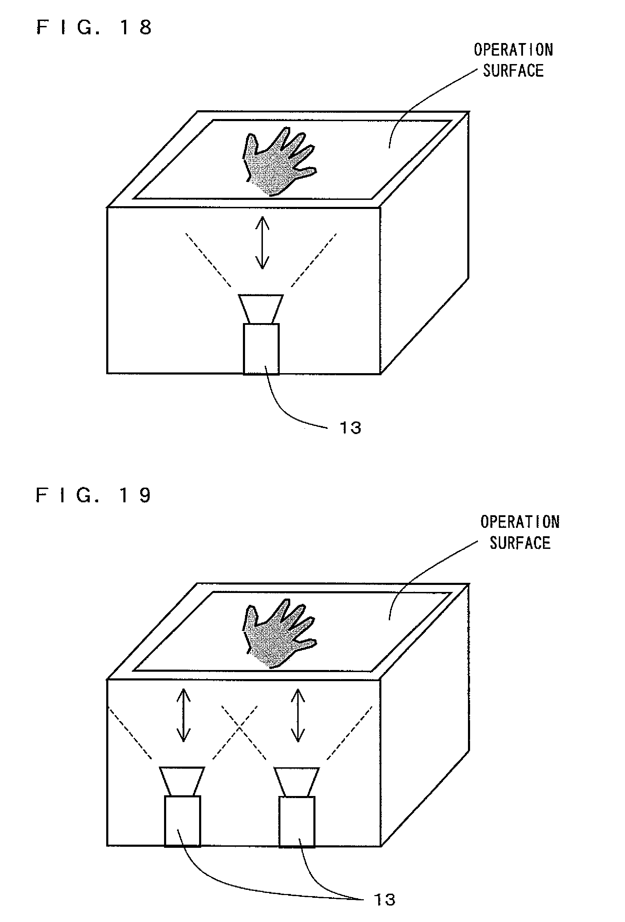

In the above description, the operation section 12 is configured with the touchpad, and the coordinate point on the touch panel which is pressed by the operator is interrelated with the coordinate point on the screen of the image A or B. The touchpad may be of any type as long as the touchpad is configured with a device which can detect a pressed coordinate point, however, the touchpad does not need to be used. For example, as shown in FIG. 18, there may be considered a method in which the imaging section 13 is situated under a transparent operation surface so as to measure a distance therefrom to the hand of the operator, and whether or not the hand of the operator has contact with the operation surface is determined. FIG. 18 is a diagram showing an exemplary imaging section 13 located under the operation screen. In this case, if a coordinate point of a contact point which is calculated based on the image taken by the imaging section 13 is interrelated with the coordinate point on the image A, the operation section 12 may be configured only with the imaging section 13 without the touchpad. Further, if the imaging section 13 is situated at the position indicated in FIG. 18, the hand image obtained by the imaging section 13 is an image of a palm side. Therefore, in this case, before overlapping is performed by the hand image overlapping section 103, the hand image is reversed from side to side. That is, a mirror image of the hand image is to be overlapped. As shown in FIG. 19, the number of the imaging section 13 situated under the operation surface may be two or more. FIG. 19 is a diagram showing a configuration including two imaging sections 13. The operation section 12 may have a configuration in which the imaging section 13 takes only a hand with which an operation is to be performed, and an input device (such as a switch and the touchpad) for enabling input operation such as pressing is situated at a position outside a range of an image taken by the imaging section 13 or at a position other than the operation surface. In this case, for example, the pressed coordinate point may be set as a position of a forefinger of the hand image taken by the imaging section 13.

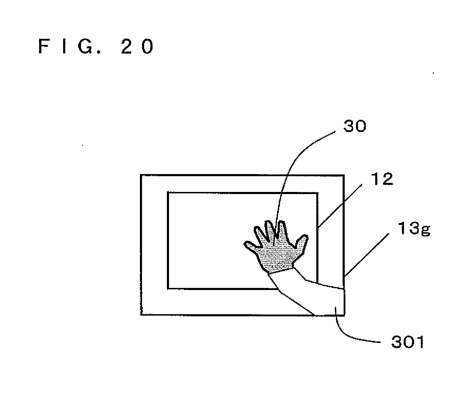

In the above description, whether the hand of the user to perform an operation is the left hand or the right hand is determined by the right hand/left hand determination section 102, whereby whether an image viewed by the user who performs the operation is the image A or the image B is determined. However, such determination may be made by using another method. For example, the IR tag may be used, which includes the identification information indicatingwhether the user, who performs the operation, views the image A or the image B. Further, as shown in FIG. 20, there may be adopted a method in which instead of based on the hand of the user who performs the operation, based on a moving direction and/or a position of an arm, whether the user who performs the operation views the image A or the image B is determined. FIG. 20 is a diagram showing an exemplary image 13g of the operation section 12 and the circumference thereof which are taken by the imaging section 13. In FIG. 20, for example, suppose that a hand 30 is entered into the image 13g taken by the imaging section 13. In this case, the arm portion 301 of the hand 30 is situated on the right side of the image. Therefore, if a position of the arm portion 301 is detected from the image 13g taken by the imaging section 13, it is possible to determine that the user who performs the operation views the image B on the right side of the operation section 12.

### INDUSTRIAL APPLICABILITY

The present invention is useful as an information processing apparatus or the like which is capable of cause a user who performs an operation to feel an intuitive operation, and which includes an imaging device capable of providing an improved viewability.

## Claims

1. An information processing device for performing processing in response to an operation performed by a user, the information processing device comprising:
a display section for concurrently displaying a left image which is viewable from a left side view direction of a display surface and a right image which is viewable from a right side view direction of the display surface;
an operation section for receiving an operation performed by the user for specifying a position on an image displayed on the display section;
an imaging section for taking an image of a hand of the user performing an operation on the operation section;
a hand image generation section for generating a hand image representing the hand of the user performing the operation by using the image taken by the imaging section;
an operating hand determination section for determining whether the hand of the user performing the operation on the operation section is the left hand or the right hand;
an image determination section for determining whether an image viewed by the user who performs the operation is the left image or the right image in accordance with a result determined by the operating hand determination section; and
an execution processing section for executing a display of the left image and the right image having the hand image overlapped thereon and for executing processing indicated at a position on the right image in accordance with the consideration that the position on the right image has been specified, the position on the right image corresponding to the position specified on the operation section, when the image determination section determines the right image is viewed by the user, and for executing a display of the right image and the left image having the hand image overlapped thereon and for executing processing indicated at a position on the left image in accordance with the consideration that the position on the left image has been specified, the position on the left image corresponding to the position specified on the operation section, when the image determination section determines the left image is viewed by the user.

2. The information processing device according to claim 1, wherein the operating hand determination section determines whether the hand of the user performing the operation is the left hand or the right hand in accordance with the hand image generated by the hand image generation section.

3. The information processing device according to claim 1, further comprising
an identification information reader section for reading identification information contained in an IR tag worn on the hand of the user performing the operation, wherein
the operating hand determination section determines whether the hand of the user performing the operation is the left hand or the right hand in accordance with the identification information read by the identification information reader section.

4. The information processing device according to any of claims 1 to 3, wherein when the left hand is determined by the operating hand determination section as the hand of the user, the execution processing section changes the left image to an image which is identical to the right image, and then causes the hand image to be overlapped and displayed on the left image and on the right image, also, when the right hand is determined by the operating hand determination section as the hand of the user, the execution processing section changes the right image to an image which is identical to the left image, and then causes the hand image to be overlapped and displayed on the left image and on the right image.

5. The information processing device according to any of claims 1 to 3, wherein when the left hand is determined by the operating hand determination section as the hand of the user, the execution processing section causes a GUI component contained in the right image to be overlapped and displayed on the left image, and also causes the hand image to be overlapped and displayed on the left image and the right image, also, when the right hand is determined by the operating hand determination section as the hand of the user, the execution processing section causes the GUI component contained in the left image to be overlapped and displayed on the right image, and also causes the hand image to be overlapped and displayed on the left image and the right image.

6. The information processing device according to any of claims 1 to 3, wherein when the left hand is determined by the operating hand determination section as the hand of the user, the execution processing section causes a copy of the right image and the hand image to be translucent so as to be overlapped and displayed on the left image, and also causes the translucent hand image to be overlapped and displayed on the right image, also, when the right hand is determined by the operating hand determination section as the hand of the user, the execution processing section causes a copy of the left image and the hand image to be translucent so as to be overlapped and displayed on the right image and also causes the translucent hand image to be overlapped and displayed on the left image.

7. The information processing device according to any of claims 1 to 3, wherein when the left hand is determined by the operating hand determination section as the hand of the user, the execution processing section causes the hand image to be overlapped and displayed on a right image and also causes an image indicative of positions of fingertips of the hand image to be overlapped and displayed on the left image, also, when the right hand is determined by the operating hand determination section as the hand of the user, the execution processing section causes the hand image to be overlapped and displayed on the left image and also causes the image indicative of the positions of the fingertips of the hand image to be overlapped and displayed on the right image.

8. The information processing device according to any of claims 1 to 3, wherein when the left hand is determined by the operating hand determination section as the hand of the user, the execution processing section specifies, from among the images included in the left image, an image at a position corresponding to a position on the right image which is specified on the operation section and changes a display mode of the image, also, when the right hand is determined by the operating hand determination section as the hand of the user, the execution processing section specifies, from among the images included in the right image, an image at a position corresponding to a position on the left image which is specified on the operation section and changes the display mode of the image.

9. The information processing device according to any of claims 1 to 3, wherein
the left image and the right image include GUI components having a common display, and
different pieces of processing are interrelated with the GUI component on the left image and with the GUI component on the right image, respectively.

10. The information processing device according to any of claims 1 to 3, wherein
the operation section receives, from a user, an interrelating operation for interrelating a GUI component with processing to be executed when the GUI component is specified,
when the left hand is determined by the operating hand determination section as the hand of the user at the time of the interrelating operation, the execution processing section causes the GUI component, which is interrelated based on the interrelating operation, to be overlapped and displayed on the left image, also, when the right hand is determined by the operating hand determination section as the hand of the user at the time of the interrelating operation, the execution processing section causes the GUI component, which is interrelated based on the interrelating operation, to be overlapped and displayed on the right image.
